# EUROPÄISCHE PATENTSCHRIFT

(11) **EP 3 424 305 B1**
(45) Veröffentlichungstag und Bekanntmachung des Hinweises auf die Patenterteilung: **26.05.2021**
(21) Anmeldenummer: 17179673.3
(22) Anmeldetag: 04.07.2017
(51) Int. Cl.: A01G 23/099

(54) **VERFAHREN ZUM ASSISTIEREN BEIM FÄLLEN EINES BAUMS UND SYSTEM ZUM ASSISTIEREN BEIM FÄLLEN EINES BAUMS**
METHOD OF ASSISTING THE FELLING OF A TREE AND SYSTEM FOR ASSISTING THE FELLING OF A TREE
PROCÉDÉ ET SYSTÈME D'ASSISTANCE LORS DE L'ABATTAGE D'UN ARBRE

(43) Veröffentlichungstag der Anmeldung: 09.01.2019
(73) Patentinhaber: Andreas Stihl AG & Co. KG, 71336 Waiblingen (DE)
(72) Erfinder: Jaeger, Dirk, 35116 Hatzfeld (DE); Mang, Harald, 71364 Winnenden (DE); Maier, Bettina, 72072 Tübingen (DE); Tippelt, Martin, 71111 Waldenbuch (DE)
(74) Vertreter: Patentanwälte Ruff, Wilhelm, Beier, Dauster & Partner mbB

(56) Entgegenhaltungen:
- EP-A1- 1 757 184
- DE-A1- 4 232 412
- RU-C1- 2 489 844

## Beschreibung

### ANWENDUNGSGEBIET UND STAND DER TECHNIK

Die Erfindung bezieht sich auf ein Verfahren zum Assistieren beim Fällen eines Baums und ein System zum Assistieren beim Fällen eines Baums.

Ein Verfahren zum Assistieren beim Fällen eines Baums und ein System zum Assistieren beim Fällen eines Baums sind bekannt.

Insbesondere ist aus der EP 1 757 184 A1 eine Vorrichtung zum richtigen Ausrichten einer Fallkerbe an einem zu fällenden Körper - typischerweise einem Baum - bekannt. Die Vorrichtung wird mit einer Messkante an eine Fallkerbkante der Fallkerbe angelegt. Ein Leuchtzeiger sendet einen Leuchtstrahl in einer zur Messkante normal liegenden Ebene. Anhand eines Widerscheins, den der Leuchtzeiger im Gelände hervorruft, kann erkannt werden, wohin der Körper fallen wird.

### AUFGABE UND LÖSUNG

Der Erfindung liegt als Aufgabe die Bereitstellung eines Verfahrens zum Assistieren beim Fällen eines Baums und eines Systems zum Assistieren beim Fällen eines Baums zugrunde, das jeweils eine Sicherheit beim Fällen verbessert, ein Vermeiden von ungewollten Schäden, insbesondere des Baums, beim Fällen erleichtert und/oder ein einfaches Weiterverarbeiten des Baums ermöglicht.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein System mit den Merkmalen des Anspruchs 8 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum Assistieren oder Unterstützen beim Fällen eines Baums weist die Schritte auf: a) Bereitstellen, insbesondere automatisches Bereitstellen, oder Ermitteln einer Eigenschaft des Baums und/oder einer Eigenschaft einer Umgebung des Baums. Der Schritt a) weist auf: Empfangen, insbesondere kabelloses oder drahtloses Empfangen, oder Abrufen der Eigenschaft, insbesondere von einer Datenbank und/oder einem Netzwerk, insbesondere von dem Internet. Zusätzlich oder alternativ weist der Schritt a) auf: Erfassen der Eigenschaft mittels optischen Erfassens, insbesondere in Kombination mit Photogrammetrie, und/oder inertialen Messens und/oder einer Wasserwage und/oder eines Kompass und/oder lokalen Positionsbestimmens und/oder Satelliten-Positionsbestimmens. b) Ermitteln, insbesondere automatisches Ermitteln, von einer Fällinformation betreffend eine ideale Fällrichtung des Baums basierend auf der bereitgestellten Eigenschaft, wobei die ideale Fällrichtung ermittelt wird, wobei die Fällinformation auf der ermittelten Fällrichtung basiert oder basierend auf der ermittelten Fällrichtung (FR) ermittelt wird. c) Ausgeben, insbesondere automatisches Ausgeben, der ermittelten Fällinformation.

Das Verfahren ermöglicht eine Sicherheit beim Fällen zu verbessern, insbesondere für einen das Fällen ausführenden Forstarbeiter. Zusätzlich oder alternativ ermöglicht das Verfahren ein Vermeiden von ungewollten Schäden, insbesondere des Baums, beim Fällen zu erleichtern. Weiter zusätzlich oder alternativ ermöglicht das Verfahren ein einfaches Weiterverarbeiten des Baums. Somit kann ein maximaler wirtschaftlicher Gewinn mit dem Baum erzielt werden.

Ein Abweichen von der idealen Fällrichtung kann dazu führen, dass der Baum ungewollt auf etwas fallen und/oder einklemmen kann. Des Weiteren kann ein Abweichen dazu führen, dass der Baum, insbesondere sein Baumstamm, aufreißen und/oder splittern kann. Außerdem kann ein Abweichen dazu führen, dass der Baum ungünstig liegen kann. Dies kann einen mit dem Baum erzielbaren wirtschaftlichen Gewinn schmälern. Durch das Ausgeben der Fällinformation kann ein Risiko, dass diese Nachteile eintreten, verringert oder sogar vermieden werden.

Die Fällrichtung kann eine Himmelsrichtung aufweisen oder sein.

Der Baum kann stehend sein, insbesondere lebend.

Die Eigenschaft kann einen Wert und/oder einen Betrag aufweisen oder sein.

Insbesondere kann die Datenbank eine Forstkartei aufweisen, welche die Eigenschaft aufweisen kann.

Insbesondere kann der Baum und/oder die Umgebung des Baums durch Positionskoordinaten und/oder Orientierungswinkel beschrieben werden. Die Positionskoordinaten und/oder die Orientierungswinkel können durch jeweils mindestens eine der genannten Techniken erfasst werden. Insbesondere kann aus verschiedenen Erfassungspositionen und/oder mit Tiefeninformation optisch erfasst werden.

Der Schritt b) kann zeitgleich mit dem Schritt a) und/oder zeitlich nach diesem ausgeführt werden. Der Schritt c) kann zeitgleich mit dem Schritt b) und/oder zeitlich nach diesem ausgeführt werden.

In einer Ausgestaltung der Erfindung weist das Verfahren den Schritt auf: Ermitteln, insbesondere Vorgeben oder Erfassen, einer Position und/oder einer Kennzeichnung des Baums. Der Schritt a) weist auf: Empfangen der Eigenschaft basierend auf oder in Abhängigkeit von der ermittelten Position und/oder der ermittelten Kennzeichnung. Insbesondere kann basierend auf der ermittelten Position die Eigenschaft des Baums an dieser Position und/oder die Eigenschaft der Umgebung dieser Position empfangen werden. Basierend auf der ermittelten Kennzeichnung kann die Eigenschaft des Baums mit dieser Kennzeichnung und/oder die Eigenschaft der Umgebung dieses Baums empfangen werden. Zusätzlich oder alternativ kann basierend auf der ermittelten Kennzeichnung die Position des Baums mit dieser Kennzeichnung empfangen werden. Basierend auf der empfangenen Position kann die Eigenschaft empfangen werden. Insbesondere kann die Kennzeichnung an dem Baum angebracht sein, insbesondere von dem Forstarbeiter. Die Kennzeichnung kann mindestens ein Zeichen, insbesondere einen Buchstaben und/oder eine Zahl, und/oder einen Code, insbesondere einen Barcode und/oder einen QR-Code, aufweisen. Insbesondere mittels des optischen Erfassens kann die zuvor beschriebene Kennzeichnung ermittelt werden. Insbesondere mittels des lokalen Positionsbestimmens und/oder des Satelliten-Positionsbestimmens kann die zuvor beschriebene Position ermittelt werden.

In einer Weiterbildung der Erfindung weist die Eigenschaft des Baums eine Geometrie des Baums und/oder eine Oberflächenbeschaffenheit des Baums und/oder eine Baumart des Baums auf oder ist eine solche spezifische Eigenschaft des Baums. Zusätzlich oder alternativ weist die Eigenschaft der Umgebung des Baums mindestens eine Position mindestens eines benachbarten Baums und/oder mindestens eine Position mindestens einer Gefahrenstelle und/oder mindestens eine Position mindestens einer Rückegasse und/oder eine Form und/oder eine Neigung der Umgebung und/oder eine Windrichtung und/oder -Geschwindigkeit auf oder ist eine solche spezifische Eigenschaft der Umgebung. Ein Fällverhalten des Baums kann von der Geometrie, der Oberflächenbeschaffenheit und/oder der Baumart des Baums abhängen oder zumindest beeinflusst sein. Insbesondere kann die Geometrie des Baums eine Höhe und/oder einen Durchmesser und/oder eine Krümmung und/oder eine Neigung und/oder eine Kontur und/oder eine Form und/oder eine Astverteilung und/oder eine Kronenlast des Baums oder seines Baumstamms aufweisen oder sein. Die Geometrie des Baums kann insbesondere durch jeweils mindestens eine der zuvor beschrieben Techniken zum Erfassen der Eigenschaft erfasst werden. Insbesondere kann aus der Oberflächenbeschaffenheit die Baumart und/oder ein Gesundheitszustand des Baums erfasst, insbesondere ermittelt, werden. Die Oberflächenbeschaffenheit und/oder der Gesundheitszustand können/kann Schäden, insbesondere Holzschäden, aufweisen. Der Gesundheitszustand kann einen Schädlingsbefall und/oder eine Fäule aufweisen. Die Baumart kann Eiche oder Fichte oder Kiefer oder Buche oder eine andere Baumart sein. Die Oberflächenbeschaffenheit und/oder die Baumart können/kann insbesondere durch das zuvor beschriebene optische Erfassen erfasst werden. Insbesondere kann aus der Geometrie und/oder der Oberflächenbeschaffenheit des Baums ein Faserverlauf des Baums beziehungsweise seines Baumstamms erfasst, insbesondere ermittelt, werden. Das Fällverhalten des Baums kann von der Windrichtung und/oder -Geschwindigkeit abhängen oder zumindest beeinflusst sein. Ein Verhalten des Baums während des Fällens oder nach dem Fällen oder ein Weiterverarbeiten des Baums kann von der Position des benachbarten Baums, der Position der Gefahrenstelle, der Position der Rückegasse, der Form der Umgebung und/oder der Neigung der Umgebung abhängen oder zumindest beeinflusst sein. Die Rückegasse kann zum Holen des gefällten Baums dienen. Die Form der Umgebung kann eben sein oder rau. Insbesondere kann die Umgebung Felsen und/oder Klippen aufweisen. Die Neigung der Umgebung kann ein Gefälle und/oder eine Hangrichtung aufweisen. Die Position des benachbarten Baums, die Position der Gefahrenstelle, die Position der Rückegasse, der Form der Umgebung und/oder der Neigung der Umgebung können/kann insbesondere durch jeweils mindestens eine der zuvor beschrieben Techniken zum Erfassen der Eigenschaft erfasst werden. Die Windrichtung und/oder -Geschwindigkeit kann empfangen werden.

In einer Weiterbildung der Erfindung weist der Schritt b) auf: Ermitteln einer freien Fallfläche für den Baum und/oder einer Rückerichtung zu einer Rückegasse und/oder einer Rückweiche für den Forstarbeiter basierend auf der bereitgestellten Eigenschaft. Die Fällinformation betreffend die ideale Fällrichtung des Baums wird basierend auf der ermittelten Freifläche und/oder der ermittelten Rückerichtung und/oder der ermittelten Rückweiche ermittelt. Anders formuliert: Ermitteln der Fällrichtung des Baums derart, dass der Baum auf keinen benachbarten Baum und/oder keine Gefahrenstelle in der Umgebung, insbesondere beim Fällen, fällt und/oder dass der Baum in Richtung einer Rückegasse fällt und/oder dass der Baum beim Fallen mindestens eine Rückweiche frei lässt. Die Fallfläche kann als Fällschneise bezeichnet werden. Die Rückweiche kann oder sollte 45 Grad schräg entgegen der Fällrichtung verlaufen.

In einer Weiterbildung der Erfindung weist die Fällinformation auf: die ideale Fällrichtung des Baums und/oder mindestens einen Teil eines idealen Verlaufs mindestens eines auszuführenden Schnitts in den Baum zum Fällen von dem Baum in die ideale Fällrichtung und/oder mindestens eine ideale Position und/oder mindestens eine ideale Orientierung beziehungsweise Ausrichtung eines den Schnitt ausführenden Schneidgeräts. Insbesondere kann die Fällinformation aufweisen, wo und/oder wie am Baum mit dem Ausführen des Schnitts angefangen und/oder das Ausführen beendet werden kann oder soll. Die ideale Position kann eine Anfangsposition oder eine Endposition sein. Die ideale Orientierung kann eine Anfangsorientierung oder eine Endorientierung sein. Insbesondere kann der mindestens eine Teil des idealen Verlaufs des mindestens einen auszuführenden Schnitts basierend auf der idealen Fällrichtung ermittelt werden. Die ideale Position und/oder die ideale Orientierung können/kann basierend auf dem mindestens einen Teil des idealen Verlaufs ermittelt werden. Der Teil des Verlaufs kann insbesondere ein Anfang, insbesondere eine Anfangslinie, oder ein Ende, insbesondere eine Endlinie des Verlaufs sein. Der mindestens eine auszuführende Schnitt kann aus einer Gruppe ausgewählt sein, die Gruppe bestehend aus: ein Fallkerbsohlenschnitt, ein Fallkerbdachschnitt und ein Fällschnitt. Insbesondere können der Fallkerbsohlenschnitt, der Fallkerbdachschnitt und der Fällschnitt in dieser Reihenfolge oder der Fallkerbdachschnitt, der Fallkerbsohlenschnitt und der Fällschnitt in dieser Reihenfolge eine Schnittfolge bilden. Der Fallkerbsohlenschnitt und der Fallkerbdachschnitt können oder sollten sich genau in einer Fallkerbsehne treffen und keiner der beiden Schnitte sollte über den anderen hinausgehen. Der Fallkerbsohlenschnitt und der Fallkerbdachschnitt können einen Fallkerb beziehungsweise einen Fallkeil bilden. Der Fallkerb kann eine Fallrichtung des Baums bestimmen und kann dazu dienen, ein Kippen des Baums in die gewünschte Fällrichtung zu ermöglichen. Zusätzlich kann oder sollte der Fallkerbdachschnitt beziehungsweise sein Verlauf mindestens einen Winkel von 45 Grad zum Fallkerbsohlenschnitt beziehungsweise seinem Verlauf aufweisen, um so eine ausreichend große Öffnung zu bekommen. So kann sichergestellt werden, dass der Baum während des Fallens nicht mit dem Fallkerbdach auf der Fallkerbsohle aufsitzen kann und der Baumstamm beim Aufsitzen in Längsachse aufreißen kann. Der Fällschnitt kann oder sollte ein Zehntel des Durchmessers des Baumstamms, mindestens jedoch 3 Zentimeter (cm) lateral neben der Fallkerbsehne, angefangen oder angesetzt werden. Dieser horizontale Versatz kann als Bruchleiste bezeichnet werden. Des Weiteren kann oder sollte der Fällschnitt ein Zehntel des Durchmessers des Baumstamms, mindestens jedoch 3 cm oberhalb der Fallkerbsehne angefangen werden. Dieser vertikale Versatz kann als Bruchstufe bezeichnet werden. Eine Endlinie des Fällschnitts, die als Bruchsehne bezeichnet werden kann, kann oder sollte parallel zur Fallkerbsehne verlaufen. Bruchleiste und -stufe können ein Scharnier bilden, welches den Baum während Fällarbeiten halten kann und beim Fallen sicher führen kann. Ein Anschneiden der Bruchleiste und/oder der Bruchstufe kann zu einer Abweichung von der vorgesehenen Fällrichtung führen. Zusätzlich kann die Fällinformation eine Geräteinformation aufweisen. Die Geräteinformation kann aufweisen: im Falle eines motorangetriebenen Schneidgeräts eine Leistung des Motors, eine Länge einer Schneide des Schneidgeräts und/oder ob und welche anderen Hilfsgeräte wie Keile oder ein Fällheber zum Fällen des Baums verwendet werden sollten.

In einer Ausgestaltung der Erfindung wird die Fällinformation optisch und/oder akustisch und/oder haptisch ausgegeben. Dies kann dem Forstarbeiter eine relativ gute Wahrnehmung der Fällinformation ermöglichen. Insbesondere kann das optische Ausgeben ein Anzeigen aufweisen. Das optische Ausgeben kann ein Einblenden oder Projizieren der Fällinformation in ein Sichtfeld des Forstarbeiters aufweisen, insbesondere vor dem Baum. Das optische Ausgeben kann ein Projizieren der Fällinformation auf den Baum aufweisen. Das haptische Ausgeben kann ein Vibrieren aufweisen.

In einer Weiterbildung der Erfindung weist das Verfahren die Schritte auf: d) Erfassen, insbesondere automatisches Erfassen, mindestens eines Teils eines, insbesondere tatsächlichen, Verlaufs eines Schnitts in den Baum zum Fällen von dem Baum während seines Ausführens und/oder Erfassen einer Position und/oder einer Orientierung eines den Schnitt ausführenden Schneidgeräts während des Ausführens. e) Vergleichen, insbesondere automatisches Vergleichen, des erfassten Teils des Verlaufs mit einem ermittelten Teil eines idealen Verlaufs eines auszuführenden Schnitts in den Baum zum Fällen von dem Baum in die ideale Fällrichtung und/oder Vergleichen der erfassten Position und/oder der erfassten Orientierung des Schneidgeräts mit einer ermittelten idealen Position und/oder einer ermittelten idealen Orientierung des Schneidgeräts zum Ausführen des auszuführenden Schnitts, insbesondere während des Schritt d). f) Ermitteln, insbesondere automatisches Ermitteln, und Ausgeben, insbesondere automatisches Ausgeben, einer Schneidinformation zum Ausführen des Schnitts basierend auf dem Vergleich während des Schritt d). Dies kann ermöglichen, ein Abweichen von dem mindestens einen Teil des idealen Verlaufs des auszuführenden Schnitts beim Ausführen des Schnitts zu vermeiden oder bei einem Abweichen auf den idealen Verlauf wieder zurückzukehren. Die Schneidinformation kann eine Anweisung zum Zurückkehren, insbesondere eine Positionsanweisung und/oder eine Orientierungsanweisung, aufweisen. Zusätzlich oder alternativ kann die Schneidinformation eine Anweisung zum Beenden des Ausführens des Schnitts aufweisen. Die Schneidinformation kann wie die Fällinformation ausgegeben werden. Der Teil des Verlaufs des Schnitts und/oder die Position und/oder die Orientierung des Schneidgeräts können/kann durch die zuvor beschriebenen Techniken zum Erfassen der Eigenschaft erfasst werden. Der Teil des Verlaufs kann basierend auf der erfassten Position und/oder der erfassten Orientierung des Schneidgeräts ermittelt werden.

Des Weiteren bezieht sich die Erfindung auf ein System zum Assistieren beim Fällen des Baums. Das System kann insbesondere zum Ausführen des zuvor beschriebenen Verfahrens ausgebildet sein. Das erfindungsgemäße System weist eine Bereitstellungseinrichtung, eine Ermittlungseinrichtung und eine Ausgabeeinrichtung auf. Die Bereitstellungseinrichtung ist zum Bereitstellen der Eigenschaft des Baums und/oder der Eigenschaft der Umgebung des Baums ausgebildet. Die Bereitstellungseinrichtung weist eine Empfangseinrichtung auf, die zum Empfangen der Eigenschaft ausgebildet ist. Zusätzlich oder alternativ weist die Bereitstellungseinrichtung eine Erfassungseinrichtung auf, die zum Erfassen der Eigenschaft ausgebildet ist. Die Erfassungsrichtung weist eine Kamera und/oder eine inertiale Messeinheit und/oder die Wasserwaage und/oder den Kompass und/oder ein lokales Positionsbestimmungsgerät und/oder ein Satelliten-Positionsbestimmungsgerät auf. Die Ermittlungseinrichtung ist zum Ermitteln von der Fällinformation betreffend die ideale Fällrichtung des Baums basierend auf der bereitgestellten Eigenschaft ausgebildet, wobei die ideale Fällrichtung ermittelt wird, wobei die Fällinformation auf der ermittelten Fällrichtung basiert oder basierend auf der ermittelten Fällrichtung ermittelt wird. Die Ausgabeeinrichtung ist zum Ausgeben der ermittelten Fällinformation ausgebildet.

Das System kann die gleichen Vorteile ermöglichen wie das zuvor beschriebene Verfahren.

Insbesondere kann die Ermittlungseinrichtung einen Prozessor, insbesondere eine CPU, aufweisen oder sein.

Die Empfangseinheit kann eine Mobilfunk-Empfangseinheit aufweisen, insbesondere eine UMTS-, WLAN-, und/oder Bluetooth-Empfangseinheit oder eine auf einer anderen Technik basierende Empfangseinheit.

Die Kamera kann eine Stereokamera und/oder eine TOF-Kamera für Tiefeninformation aufweisen. TOF-Kameras sind 3D-Kamerasysteme, die mit dem Laufzeitverfahren (Englisch: time of flight) Distanzen messen können. Die inertiale Messeinheit kann mindestens einen Beschleunigungssensor und/oder mindestens einen Drehratensensor aufweisen. Die Wasserwaage kann als eine elektrische beziehungsweise digitale Wasserwaage ausgebildet sein. Der Kompass kann als ein elektrischer oder digitaler Kompass ausgebildet sein. Vorteilhafterweise kann das lokale Positionierungssystemgerät auf einer oder mehreren verschiedenen Technologien basieren wie Abstandsmessungen zu Knotenpunkten, optischen Signalen, Radiowellen, magnetischen Feldern, akustischen Signalen, Ultrabreitband, Bluetooth, WLAN, Ultraschall und/oder RFID. Das Satelliten-Positionsbestimmungsgerät kann für eines oder mehrere Satelliten-Positionsbestimmungssysteme wie NAVSTAR GPS, GLONASS, Galileo und/oder BeiDou ausgebildet sein. Zusätzlich oder alternativ kann das Satelliten-Positionsbestimmungsgerät als ein RTK-Satelliten-Positionsbestimmungsgerät (Englisch: real time kinematic) und/oder als ein differentielles Satelliten-Positionsbestimmungsgerät ausgebildet sein.

In einer Weiterbildung der Erfindung weist die Ausgabeeinrichtung eine Anzeige und/oder einen Schallerzeuger und/oder eine Vibrationseinrichtung auf oder ist ein/e solche/r. Insbesondere kann die Anzeige dazu ausgebildet sein, die Fällinformation in dem Sichtfeld des Forstarbeiters, insbesondere vor dem Baum, anzuzeigen und/oder in dieses zu projizieren oder einzublenden, insbesondere vor und/oder während einem Ausführen des Fällens durch den Forstarbeiter. Die Anzeige kann auf Englisch als Head-up-Display bezeichnet werden. Dies kann auf Englisch als Virtual Reality und/oder als Augmented Reality bezeichnet werden.

In einer Weiterbildung der Erfindung weist das System einen Schutzhelm, einen Gesichts- und/oder Gehörschutz, eine Schutzbrille, einen Schutzhandschuh, eine Smartwatch, ein Armband oder einen Armreif auf, an welchem/welcher die Bereitstellungseinrichtung und/oder die Ausgabeeinrichtung angeordnet sind/ist. Dies ermöglicht das Tragen der Bereitstellungseinrichtung und/oder der Ausgabeeinrichtung am Körper des Forstarbeiters. Somit kann der Forstarbeiter insbesondere die Erfassungseinrichtung, soweit vorhanden, mit sich führen. In anderen Worten kann die Erfassungseinrichtung das erfassen, womit sich der Forstarbeiter gerade beschäftigen kann. Insbesondere kann die Anzeige, soweit vorhanden, dazu ausgebildet sein, die Fällinformation auf einem Visier des Schutzhelms, des Gesichts- und/oder Gehörschutz und/oder der Schutzbrille, soweit vorhanden, anzuzeigen oder in diese zu projizieren. Die Anzeige kann auf Englisch als Head-mounted-Display bezeichnet werden.

In einer Weiterbildung der Erfindung weist das System das Schneidgerät auf, das zum Ausführen des mindestens einen Schnitts in den Baum zum Fällen von dem Baum ausgebildet ist. Insbesondere kann das Schneidgerät eine Säge aufweisen oder sein. Die Säge kann eine Motorsäge und/oder eine Kettensäge aufweisen oder sein. Insbesondere kann das Schneidgerät als ein handgetragenes Schneidgerät ausgebildet sein. Handgetragenes Schneidgerät kann bedeuten, dass das Schneidgerät eine maximale Masse von 50 Kilogramm (kg), insbesondere von 20 kg, insbesondere von 10 kg, aufweisen kann. An dem Schneidgerät können/kann die Bereitstellungseinrichtung und/oder die Ausgabeeinrichtung angeordnet sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Perspektivansicht eines erfindungsgemäßen Systems,
- Fig. 3: eine weitere Perspektivansicht des Systems der Fig. 2 beim Bereitstellen einer Eigenschaft eines zu fällenden Baums und einer Eigenschaft einer Umgebung des Baums,
- Fig. 4: eine weitere Perspektivansicht des Systems der Fig. 2 beim Ausgeben einer Fällinformation und
- Fig. 5: eine Längsschnittansicht des Baums der Fig. 3 beim Fällen.

### DETAILLIERTE BESCHREIBUNG DER AUSFÜHRUNGSBEISPIELE

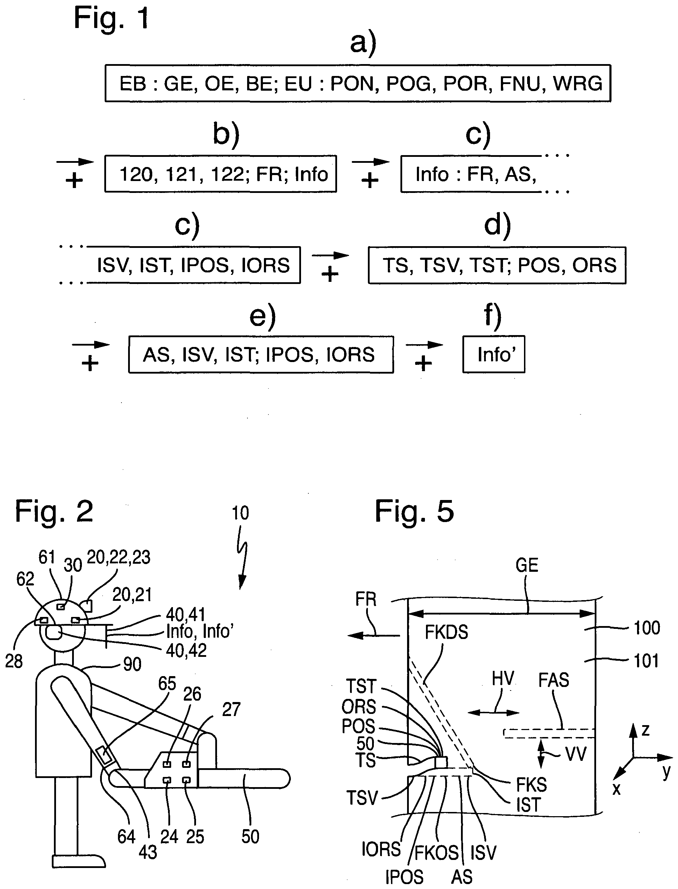

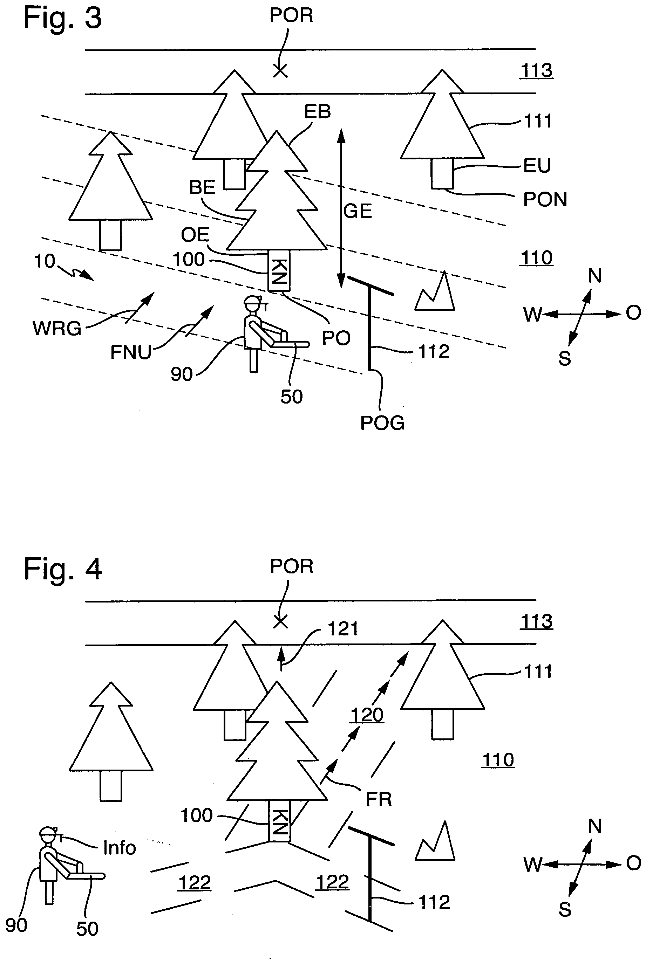

Fig. 1 zeigt ein erfindungsgemäßes Verfahren zum Assistieren beim Fällen eines, insbesondere stehenden, Baums 100 beziehungsweise seines Baumstamms 101, wie in Fig. 3 bis 5 zu erkennen. Das Verfahren weist die Schritte auf: a) Bereitstellen einer Eigenschaft EB des Baums 100 und einer Eigenschaft EU einer Umgebung 101 des Baums 100. b) Ermitteln von einer Fällinformation Info betreffend eine ideale Fällrichtung FR des Baums 100 basierend auf der bereitgestellten Eigenschaft EB, EU. c) Ausgeben der ermittelten Fällinformation Info. In alternativen Ausführungsbeispielen kann es ausreichen, wenn der Schritt a) aufweisen kann: Bereitstellen entweder der Eigenschaft des Baums oder der Eigenschaft der Umgebung des Baums.

Fig. 2 bis 5 zeigen ein erfindungsgemäßes System 10 zum Assistieren beim Fällen des Baums 100. Das System 10 ist insbesondere zum Ausführen des zuvor beschriebenen Verfahrens ausgebildet. Das System 10 weist eine Bereitstellungseinrichtung 20, eine Ermittlungseinrichtung 30 und eine Ausgabeeinrichtung 40 auf. Die Bereitstellungseinrichtung 20 ist zum Bereitstellen der Eigenschaft EB des Baums 100 und der Eigenschaft EU der Umgebung 110 des Baums 100 ausgebildet. Die Ermittlungseinrichtung 30 ist zum Ermitteln von der Fällinformation Info betreffend die ideale Fällrichtung FR des Baums 100 basierend auf der bereitgestellten Eigenschaft EB, EU ausgebildet. Die Ausgabeeinrichtung 40 ist zum Ausgeben der ermittelten Fällinformation Info ausgebildet. In alternativen Ausführungsbeispielen kann es ausreichen, wenn die Bereitstellungseinrichtung zum Bereitstellen entweder der Eigenschaft des Baums oder der Eigenschaft der Umgebung des Baums ausgebildet sein kann.

Im Detail weist die Bereitstellungseinrichtung 20 eine Erfassungseinrichtung 22 auf. Die Erfassungseinrichtung 22 ist zum Erfassen der Eigenschaft EB, EU ausgebildet. Im gezeigten Ausführungsbeispiel weist die Erfassungseinrichtung 22 eine Kamera 23 und ein Satelliten-Positionsbestimmungsgerät 28 auf. In alternativen Ausführungsbeispielen kann die Erfassungseinrichtung entweder die Kamera oder das Satelliten-Positionsbestimmungsgerät aufweisen. Weiter kann in alternativen Ausführungsbeispielen die Erfassungseinrichtung zusätzlich oder alternativ eine inertiale Messeinheit und/oder eine Wasserwaage und/oder einen Kompass und/oder ein lokales Positionsbestimmungsgerät aufweisen.

Des Weiteren weist die Bereitstellungseinrichtung 20 eine Empfangseinrichtung 21 auf. Die Empfangseinrichtung 21 ist zum Empfangen der Eigenschaft EB, EU ausgebildet. Im gezeigten Ausführungsbeispiel ist die Empfangseinrichtung als eine Mobilfunk-Antenne ausgebildet. In alternativen Ausführungsbeispielen kann die Bereitstellungseinrichtung entweder die Erfassungseinrichtung oder die Empfangseinrichtung aufweisen.

Außerdem weist das System 10 einen Schutzhelm 61, einen Gesichts- und/oder Gehörschutz 62, einen Schutzhandschuh 64 und eine Smartwatch 65 auf. Im gezeigten Ausführungsbeispiel sind die Kamera 23, das Satelliten-Positionsbestimmungsgerät 28 und die Empfangseinrichtung 21 an dem Schutzhelm 61 angeordnet, insbesondere integriert, wie in Fig. 2 zu erkennen. In alternativen Ausführungsbeispielen kann die Bereitstellungseinrichtung zusätzlich oder alternativ an dem Gesichts- und/oder Gehörschutz, dem Schutzhandschuh und/oder der Smartwatch angeordnet sein. Weiter kann in alternativen Ausführungsbeispielen das System eine Schutzbrille, ein Armband oder einen Armreif aufweisen, an welchem/welcher die Bereitstellungseinrichtung angeordnet sein kann.

Zudem ist die Ermittlungseinrichtung 30 an dem beziehungsweise in dem Schutzhelm 61 angeordnet.

Entsprechend weist der Schritt a) auf: Erfassen der Eigenschaft EB, EU mittels optischen Erfassens, insbesondere mittels der Kamera 23, und Satelliten-Positionsbestimmens, insbesondere mittels des Satelliten-Positionsbestimmungsgeräts 28. In alternativen Ausführungsbeispielen kann der Schritt a) aufweisen: Erfassen der Eigenschaft entweder mittels optischen Erfassens oder mittels Satelliten-Positionsbestimmens. Weiter kann in alternativen Ausführungsbeispielen der Schritt a) zusätzlich oder alternativ aufweisen: Erfassen der Eigenschaft mittels inertialen Messens und/oder einer Wasserwage und/oder eines Kompass und/oder lokalen Positionsbestimmens.

Zudem weist der Schritt a) auf: Empfangen der Eigenschaft EB, EU, insbesondere mittels der Empfangseinrichtung 21.

Im Detail weist das Verfahren den Schritt auf: Ermitteln einer Position PO, insbesondere mittels des Satelliten-Positionsbestimmungsgeräts 28, und einer Kennzeichnung KN des Baums 100, insbesondere mittels der Kamera 23. Der Schritt a) weist auf: Empfangen der Eigenschaft EB,

EU basierend auf der ermittelten Position PO und der ermittelten Kennzeichnung KN. In alternativen Ausführungsbeispielen kann das Verfahren den Schritt aufweisen: Ermitteln entweder der Position oder der Kennzeichnung des Baums. Entsprechend kann der Schritt a) aufweisen: Empfangen der Eigenschaft basierend auf entweder der ermittelten Position oder der ermittelten Kennzeichnung.

Im gezeigten Ausführungsbeispiel trägt ein Forstarbeiter 90 den Schutzhelm 61, wie in Fig. 3 zu erkennen. Der Forstarbeiter 90 geht, insbesondere erstens, um den Baum 100 herum. Dabei wird die Eigenschaft EB des Baums 100 aus verschiedenen Erfassungspositionen mittels der Kamera 23 optisch erfasst.

Im Detail weist die Eigenschaft EB des Baums 100 eine Geometrie GE des Baums 100 und eine Oberflächenbeschaffenheit OE des Baums 100 und eine Baumart BE des Baums 100 auf. In alternativen Ausführungsbeispielen kann es ausreichen, wenn die Eigenschaft des Baums entweder die Geometrie oder die Oberflächenbeschaffenheit oder die Baumart aufweisen kann. Aus der Oberflächenbeschaffenheit OE wird der Gesundheitszustand des Baums 100 erfasst, insbesondere ermittelt. Aus der Geometrie GE und der Oberflächenbeschaffenheit OE des Baums wird Faserverlauf des Baums 100 beziehungsweise seines Baumstamms 101 erfasst, insbesondere ermittelt.

Zusätzlich wird beim Herumgehen die Kennzeichnung KN des Baums 100 mittels der Kamera 23 ermittelt. Basierend auf der ermittelten Kennzeichnung KN wird die Eigenschaft EU der Umgebung 110 des Baums 100 empfangen. In alternativen Ausführungsbeispielen kann zusätzlich oder alternativ basierend auf der ermittelten Kennzeichnung die Eigenschaft des Baums empfangen werden.

Weiter zusätzlich wird die Position PO des Baums 100 mittels des Satelliten-Positionsbestimmungsgeräts 28 ermittelt. Basierend auf der ermittelten Position PO wird die Eigenschaft der Umgebung 110 des Baums empfangen. In alternativen Ausführungsbeispielen kann zusätzlich oder alternativ basierend auf der ermittelten Position die Eigenschaft des Baums empfangen werden.

Im Detail weist die, insbesondere empfangene, Eigenschaft EU des Baums 100 eine Windrichtung und -Geschwindigkeit WRG auf.

Außerdem geht der Forstarbeiter 90, insbesondere zweitens, in der Umgebung 110 des Baums herum. Dabei wird die Eigenschaft EU der Umgebung 110 aus verschiedenen Erfassungspositionen mittels der Kamera 23 optisch erfasst.

Im Detail weist die, insbesondere erfasste, Eigenschaft EU der Umgebung 110 mindestens eine Position PON mindestens eines benachbarten Baums 111 und/oder mindestens eine Position POG mindestens einer Gefahrenstelle 112 und/oder mindestens eine Position POR mindestens einer Rückegasse 113 und/oder eine Form und/oder eine Neigung FNU der Umgebung auf.

In alternativen Ausführungsbeispielen kann es ausreichen, wenn die Eigenschaft der Umgebung entweder die mindestens eine Position mindestens eines benachbarten Baums oder die mindestens eine Position mindestens einer Gefahrenstelle oder die mindestens eine Position mindestens einer Rückegasse oder die Form und/oder die Neigung der Umgebung oder die Windrichtung und/oder -Geschwindigkeit aufweisen kann.

Im gezeigten Ausführungsbeispiel sind in der Umgebung 110 des Baums 100 drei benachbarte Bäume 111 in Form von Fällverbotsbäumen, wie in Fig. 3 und 4 zu erkennen. Des Weiteren ist in der Umgebung 110 eine Gefahrenstelle 112 in Form eines Strommasts. Außerdem ist in der Umgebung 110 eine Rückegasse 113, in Fig. 3 und 4 oben beziehungsweise in Himmelsrichtung Norden. Weiter ist die Form FNU der Umgebung 110 eben mit Ausnahme eines Felsens. Zudem ist die Umgebung abfallend, in Fig. 3 und 4 nach rechts oben beziehungsweise in Himmelsrichtung Nordosten, wie durch gestrichelte Höhenlinien angedeutet. Des Weiteren ist eine Windrichtung WRG in Fig. 3 und 4 nach rechts oben beziehungsweise in Himmelsrichtung Nordosten.

Die Geometrie GE, die Oberflächenbeschaffenheit OE und die Baumart BE lassen kein besonderes Fällverhalten des Baums 100 erwarten.

Jedoch weist die Geometrie GE des Baums 100 eine Höhe des Baums 100 auf und ein Wert der Höhe GE ist relativ größer als ein Abstand zwischen der Position PO des Baums 100 und den Positionen PON der benachbarten Bäume 111, ein Abstand zwischen der Position PO und der Position POG der Gefahrenstelle 112 und ein Abstand zu dem Felsen. Des Weiteren ist eine der Positionen PON eines der benachbarten Bäume 111 zwischen der Position PO des Baums 100 und einer nächsten Position POR der Rückegasse 113.

Somit besteht bei einer nicht idealen Fällrichtung, insbesondere bei einem Fällen direkt in Richtung Rückegasse 113, die Gefahr, dass der Baum 100 auf einen der benachbarten Bäume 111, die Gefahrenstelle 112 oder den Felsen fällt. Des Weiteren besteht die Gefahr, dass der Wind eine Richtung des Baums 100 beim Fallen ändert oder zumindest beeinflusst. Außerdem besteht aufgrund des Gefälles der Umgebung 110 die Gefahr, dass der Baum 100 beziehungsweise sein Baumstamm 101 bei einer ungünstigen Lage nach dem Fällen, insbesondere nach einem Entfernen seiner Baumkrone und/oder von Ästen, wegrollt und/oder wegrutscht.

Somit hängt ein Verhalten des Baums 100 während des Fällens und nach dem Fällen und ein Weiterverarbeiten des Baums 100 von den Positionen PON der benachbarten Bäume 111, der Position POG der Gefahrenstelle 112, der Position POR der Rückegasse 113, der Form und/oder der Neigung FNU der Umgebung 110 und/oder der Windrichtung und/oder - Geschwindigkeit WRG ab.

Im Detail weist der Schritt b) auf: Ermitteln einer freien Fallfläche 120 für den Baum 100 und einer Rückerichtung 121 zu der Rückegasse 113 und einer Rückweiche 122 für den Forstarbeiter 90 basierend auf der bereitgestellten Eigenschaft EB, EU. Die Fällinformation Info betreffend die ideale Fällrichtung FR des Baums 100 wird basierend auf der ermittelten Freifläche 120 und der ermittelten Rückerichtung 121 und der ermittelten Rückweiche 122 ermittelt. Im Detail werden zwei Rückweichen 122 ermittelt, die jeweils 45 Grad schräg entgegen der Fällrichtung FR verlaufen sollen beziehungsweise verlaufen. In alternativen Ausführungsbeispielen kann der Schritt b) aufweisen: entweder Ermitteln der freien Fallfläche oder der Rückerichtung oder der Rückweiche. Entsprechend kann die Fällinformation basierend auf entweder der ermittelten Freifläche oder der ermittelten Rückerichtung oder der ermittelten Rückweiche ermittelt werden.

Im gezeigten Ausführungsbeispiel ist die ermittelte ideale Fällrichtung FR in Fig. 3 und 4 nach rechts oben beziehungsweise in Himmelsrichtung Nordosten. Somit kann der Baum 100 in eine Lücke zwischen zwei der benachbarten Bäume 111 fallen. Dabei kann der Baum 100 mit dem Wind fallen. Nach dem Fallen kann der Baum 100 senkrecht zum Gefälle der Umgebung 110 und somit sicher liegen. Des Weiteren weist die ideale Fällrichtung FR einen relativ kleinen Winkel zur Rückerichtung 121 auf.

Die Ausgabeeinrichtung zum Ausgeben der ermittelten Fällinformation weist eine Anzeige 41, einen Schallerzeuger 42 und eine Vibrationseinrichtung 43 auf. In alternativen Ausführungsbeispielen kann es ausreichen, wenn die Ausgabeeinrichtung entweder die Anzeige oder den Schallerzeuger oder die Vibrationseinrichtung aufweisen kann.

Im gezeigten Ausführungsbeispiel ist die Anzeige 41 an dem Schutzhelm 61 angeordnet, insbesondere integriert, wie in Fig. 2 zu erkennen. Im Detail weist der Schutzhelm 61 ein Visier auf. Die Anzeige 41 ist dazu ausgebildet, die Fällinformation Info auf dem Visier des Schutzhelms 61 in einem Sichtfeld des Forstarbeiters 90, insbesondere vor dem Baum 100, anzuzeigen beziehungsweise in das Sichtfeld vor den Baum 100 zu projizieren. In alternativen Ausführungsbeispielen kann die Anzeige woanders angeordnet sein.

Des Weiteren ist im gezeigten Ausführungsbeispiel der Schallerzeuger 42 an dem Gesichts- und/oder Gehörschutz 62 angeordnet, insbesondere integriert. In alternativen Ausführungsbeispielen kann der Schallerzeuger woanders angeordnet sein.

Außerdem ist im gezeigten Ausführungsbeispiel die Vibrationseinrichtung 43 an einem Schneidgerät 50 angeordnet, insbesondere integriert. In alternativen Ausführungsbeispielen kann die Vibrationseinrichtung woanders angeordnet sein.

Entsprechend wird im Schritt c) die Fällinformation Info optisch, akustisch und haptisch ausgegeben. In alternativen Ausführungsbeispielen kann es ausreichen, wenn die Fällinformation entweder optisch oder akustisch oder haptisch ausgegeben werden kann.

Im Detail weist die Fällinformation Info auf: die ideale Fällrichtung FR des Baums 100 und mindestens einen Teil IST eines idealen Verlaufs ISV mindestens eines auszuführenden Schnitts AS in den Baum 100 zum Fällen von dem Baum 100 in die ideale Fällrichtung FR und mindestens eine ideale Position IPOS und mindestens eine ideale Orientierung IORS des den Schnitt AS ausführenden Schneidgeräts 50, wie in Fig. 4 und 5 zu erkennen. Der mindestens eine Teil IST des idealen Verlaufs ISV des mindestens einen auszuführenden Schnitts AS wird basierend auf der idealen Fällrichtung FR ermittelt, insbesondere mittels der Ermittlungseinrichtung 30. Die ideale Position IPOS und die ideale Orientierung IORS werden basierend auf dem mindestens einen Teil IST des idealen Verlaufs ISV ermittelt, insbesondere mittels der Ermittlungseinrichtung 30. In alternativen Ausführungsbeispielen kann es ausreichen, wenn die Fällinformation aufweisen kann: entweder die ideale Fällrichtung oder den mindestens einen Teil des idealen Verlaufs des auszuführenden Schnitts oder die ideale Position oder die ideale Orientierung des den Schnitt ausführenden Schneidgeräts.

Im gezeigten Ausführungsbeispiel weist die Fällinformation Info im Detail auf, wo und wie am Baum 100 beziehungsweise seinem Baumstamm 101 mit dem Ausführen des Schnitts AS angefangen werden soll. Insbesondere wird die Fällinformation Info in dem Sichtfeld des Forstarbeiters 90, insbesondere vor dem Baum 100, angezeigt.

Im Detail sind ein Fallkerbsohlenschnitt FKOS, ein Fallkerbdachschnitt FKDS und ein Fällschnitt FAS auszuführen, wie in Fig. 5 zu erkennen. Der Fallkerbsohlenschnitt FKOS und der Fallkerbdachschnitt FKDS treffen sich genau in einer Fallkerbsehne FKS und keiner der beiden Schnitte geht über den anderen hinaus. Der Fallkerbsohlenschnitt FKOS und der Fallkerbdachschnitt FKDS bilden einen Fallkerb. Der Fallkerb bestimmt die Fallrichtung des Baums 100. Der Fällschnitt FAS weist einen horizontalen Versatz HV zu der Fallkerbsehne FKS auf. Der horizontale Versatz HV kann als Bruchleiste bezeichnet werden. Des Weiteren weist der Fällschnitt FAS einen vertikalen Versatz VV zu der Fallkerbsehne FKS auf. Der vertikale Versatz VV kann als Bruchstufe bezeichnet werden. Ein Anschneiden der Bruchleiste und/oder der Bruchstufe kann zu einer Abweichung von der idealen Fällrichtung FR führen.

Im gezeigten Ausführungsbeispiel weist die geometrische Eigenschaft GE zusätzlich einen Durchmesser des Baums 100 beziehungsweise seines Baumstamms 101 auf. Der Fallkerbsohlenschnitt FKOS, der Fallkerbdachschnitt FKDS und der Fällschnitt FAS beziehungsweise der Verläufe werden basierend auf dem Durchmesser GE des Baums 100 ermittelt.

Des Weiteren weist das System 10 das Schneidgerät 50 auf. Das Schneidgerät 50 ist zum Ausführen des mindestens einen Schnitts AS in den Baum 100 zum Fällen von dem Baum 100 ausgebildet. Im Detail weist das Schneidgerät 50 eine Säge auf, insbesondere eine motorangetriebene Kettensäge.

Außerdem weist das System 10 eine inertiale Messeinheit 24, eine Wasserwaage 25, einen Kompass 26 und ein lokales Positionsbestimmungsgerät 27 auf. Im gezeigten Ausführungsbeispiel sind die inertiale Messeinheit 24, die Wasserwaage 25, der Kompass 26 und das lokale Positionsbestimmungsgerät 27 an dem Schneidgerät 50 beziehungsweise in dem Schneidgerät 50 angeordnet, wie in Fig. 2 zu erkennen. Mittels der inertiale Messeinheit 24, der Wasserwaage 25, des Kompass 26 und des lokalen Positionsbestimmungsgeräts 27 kann eine Position POS und eine Orientierung ORS des Schneidgeräts 50 erfasst werden. In alternativen Ausführungsbeispielen kann das System entweder die inertiale Messeinheit oder die Wasserwaage oder den Kompass oder das lokale Positionsbestimmungsgerät aufweisen.

Weiter weist das Verfahren die Schritte auf: d) Erfassen mindestens eines Teils TST eines, insbesondere tatsächlichen, Verlaufs TSV eines Schnitts TS in den Baum 100 zum Fällen von dem Baum 100 während seines Ausführens und/oder Erfassen der Position POS und/oder der Orientierung ORS des den Schnitt ausführenden Schneidgeräts 50 während des Ausführens. e) Vergleichen des erfassten Teils TST des Verlaufs TSV mit dem ermittelten Teil IST des idealen Verlaufs ISV des auszuführenden Schnitts AS in den Baum zum Fällen von dem Baum 100 in die ideale Fällrichtung FR und/oder Vergleichen der erfassten Position POS und/oder der erfassten Orientierung ORS des Schneidgeräts 50 mit der ermittelten idealen Position IPOS und/oder der ermittelten idealen Orientierung IORS des Schneidgeräts 50 zum Ausführen des auszuführenden Schnitts AS. f) Ermitteln und Ausgeben einer Schneidinformation Info' zum Ausführen des Schnitts AS basierend auf dem Vergleich während des Schritt d).

Im gezeigten Ausführungsbeispiel der Fig. 5 weicht der Verlauf TSV des Schnitts TS, insbesondere des Fallkerbsohlenschnitts FKOS, nach oben von dem idealen Verlauf ISV des auszuführenden Schnitts AS ab. Die Schneidinformation Info' weist eine Anweisung zum Zurückkehren auf den idealen Verlauf ISV auf. In diesem Fall eine Anweisung zum Zurückkehren nach unten. Insbesondere wird die Schneidinformation Info' in das Sichtfeld des Forstarbeiters 90 projiziert, insbesondere mittels eines nach unten zeigenden Pfeils. Durch das Zurückkehren auf den idealen Verlauf ZSIV des Schnitts TS, FKOS kann sichergestellt werden, dass der Baum 100 während des Fallens nicht mit dem Fallkerbdach auf der Fallkerbsohle aufsitzen kann und der Baumstamm 101 dadurch in Längsachse aufreißen kann.

Der Teil TST des Verlaufs TSV des Schnitts TS und/oder die Position POS und/oder die Orientierung ORS des Schneidgeräts 50 können/kann durch die zuvor beschriebenen Techniken zum Erfassen der Eigenschaft EB, EU erfasst werden. Der Teil TST des Verlaufs TSV kann basierend auf der erfassten Position PORS und/oder der erfassten Orientierung ORS des Schneidgeräts 50 ermittelt werden. Beim Erfassen der Position POS und der Orientierung ORS des den Schnitt TS ausführenden Schneidgeräts 50 mittels der inertialen Messeinheit 24, der Wasserwaage 25, des Kompass 26 und des lokalen Positionsbestimmungsgeräts 27 wird eine räumliche Ausdehnung beziehungsweise ein räumliche Erstreckung des Schneidgeräts 50 berücksichtigt, insbesondere eine Ausdehnung einer Führungsschiene beziehungsweise eines Kettenschwerts der Säge 50.

Wie die gezeigten und oben erläuterten Ausführungsbeispiele deutlich machen, stellt die Erfindung ein vorteilhaftes Verfahren zum Assistieren beim Fällen eines Baums und ein vorteilhaftes System zum Assistieren beim Fällen eines Baums bereit, das jeweils eine Sicherheit beim Fällen verbessert, ein Vermeiden von ungewollten Schäden, insbesondere des Baums, erleichtert und ein einfaches Weiterverarbeiten des Baums ermöglicht.

## Patentansprüche

1. Verfahren zum Assistieren beim Fällen eines Baums (100), wobei das Verfahren die Schritte aufweist:
a) Bereitstellen einer Eigenschaft (EB) des Baums (100) und/oder einer Eigenschaft (EU) einer Umgebung (110) des Baums (100),
b) Ermitteln von einer Fällinformation (Info) betreffend eine ideale Fällrichtung (FR) des Baums (100) basierend auf der bereitgestellten Eigenschaft (EB, EU), wobei die ideale Fällrichtung (FR) ermittelt wird, wobei die Fällinformation (Info) auf der ermittelten Fällrichtung (FR) basiert oder basierend auf der ermittelten Fällrichtung (FR) ermittelt wird, und
c) Ausgeben der ermittelten Fällinformation (Info), **dadurch gekennzeichnet, dass** der Schritt a) aufweist: Empfangen der Eigenschaft (EB, EU) und/oder Erfassen der Eigenschaft (EB, EU) mittels optischen Erfassens und/oder inertialen Messens und/oder einer Wasserwage (25) und/oder eines Kompass (26) und/oder lokalen Positionsbestimmens und/oder Satelliten-Positionsbestimmens.

2. Verfahren nach Anspruch 1,
- wobei das Verfahren den Schritt aufweist: Ermitteln einer Position (PO) und/oder einer Kennzeichnung (KN) des Baums (100) und
- wobei der Schritt a) aufweist: Empfangen der Eigenschaft (EB, EU) basierend auf der ermittelten Position (PO) und/oder der ermittelten Kennzeichnung (KN).

3. Verfahren nach einem der vorhergehenden Ansprüche,
- wobei die Eigenschaft (EB) des Baums (100) eine Geometrie (GE) des Baums (100) und/oder eine Oberflächenbeschaffenheit (OE) des Baums (100) und/oder eine Baumart (BE) des Baums (100) aufweist und/oder
- wobei die Eigenschaft (EU) der Umgebung (110) des Baums (100) mindestens eine Position (PON) mindestens eines benachbarten Baums (111) und/oder mindestens eine Position (POG) mindestens einer Gefahrenstelle (112) und/oder mindestens eine Position (POR) mindestens einer Rückegasse (113) und/oder eine Form und/oder eine Neigung der Umgebung (FNU) und/oder eine Windrichtung und/oder -Geschwindigkeit (WRG) aufweist.

4. Verfahren nach einem der vorhergehenden Ansprüche,
- wobei der Schritt b) aufweist: Ermitteln einer freien Fallfläche (120) für den Baum (100) und/oder einer Rückerichtung (121) zu einer Rückegasse (113) und/oder einer Rückweiche (122) für einen Forstarbeiter (90) basierend auf der bereitgestellten Eigenschaft (EB, EU) und
- wobei die Fällinformation (Info) betreffend die ideale Fällrichtung (FR) des Baums (100) basierend auf der ermittelten Freifläche (120) und/oder der ermittelten Rückerichtung (121) und/oder der ermittelten Rückweiche (122) ermittelt wird.

5. Verfahren nach einem der vorhergehenden Ansprüche,
wobei die Fällinformation (Info) aufweist:
- die ideale Fällrichtung (FR) des Baums (100) und/oder
- mindestens einen Teil (IST) eines idealen Verlaufs (ISV) mindestens eines auszuführenden Schnitts (AS) in den Baum (100) zum Fällen von dem Baum (100) in die ideale Fällrichtung (FR) und/oder
- mindestens eine ideale Position (IPOS) und/oder mindestens eine ideale Orientierung (IORS) eines den Schnitt ausführenden Schneidgeräts (50).

6. Verfahren nach einem der vorhergehenden Ansprüche,
- wobei im Schritt c) die Fällinformation (Info) optisch und/oder akustisch und/oder haptisch ausgegeben wird.

7. Verfahren nach einem der vorhergehenden Ansprüche, wobei das Verfahren die Schritte aufweist:
d) Erfassen mindestens eines Teils (TST) eines Verlaufs (TSV) eines Schnitts (TS) in den Baum (100) zum Fällen von dem Baum (100) während seines Ausführens und/oder Erfassen einer Position (POS) und/oder einer Orientierung (ORS) eines den Schnitt ausführenden Schneidgeräts (50) während des Ausführens,
e) Vergleichen des erfassten Teils (TST) des Verlaufs (TSV) mit einem ermittelten Teil (IST) eines idealen Verlaufs (ISV) eines auszuführenden Schnitts (AS) in den Baum (100) zum Fällen von dem Baum (100) in die ideale Fällrichtung (FR) und/oder Vergleichen der erfassten Position (POS) und/oder der erfassten Orientierung (ORS) des Schneidgeräts (50) mit einer ermittelten idealen Position (IPOS) und/oder einer ermittelten idealen Orientierung (IORS) des Schneidgeräts (50) zum Ausführen des auszuführenden Schnitts (AS) und
f) Ermitteln und Ausgeben einer Schneidinformation (Info') zum Ausführen des Schnitts (AS) basierend auf dem Vergleich während des Schritt d).

8. System (10) zum Assistieren beim Fällen eines Baums (100), aufweisend:
- eine Bereitstellungseinrichtung (20), die zum Bereitstellen einer Eigenschaft (EB) des Baums (100) und/oder einer Eigenschaft (EU) einer Umgebung (110) des Baums (100) ausgebildet ist,
- eine Ermittlungseinrichtung (30), die zum Ermitteln von einer Fällinformation (Info) betreffend eine ideale Fällrichtung (FR) des Baums (100) basierend auf der bereitgestellten Eigenschaft (EB, EU) ausgebildet ist, wobei die ideale Fällrichtung (FR) ermittelt wird, wobei die Fällinformation (Info) auf der ermittelten Fällrichtung (FR) basiert oder basierend auf der ermittelten Fällrichtung (FR) ermittelt wird, und
- eine Ausgabeeinrichtung (40), die zum Ausgeben der ermittelten Fällinformation (Info) ausgebildet ist, **dadurch gekennzeichnet, dass** die Bereitstellungseinrichtung (20) eine Empfangseinrichtung (21), die zum Empfangen der Eigenschaft (EB, EU) ausgebildet ist, und/oder eine Erfassungseinrichtung (22) aufweist, die zum Erfassen der Eigenschaft (EB, EU) ausgebildet ist, die Erfassungseinrichtung aufweisend eine Kamera (23) und/oder eine inertiale Messeinheit (24) und/oder eine Wasserwaage (25) und/oder einen Kompass (26) und/oder ein lokales Positionsbestimmungsgerät (27) und/oder ein Satelliten-Positionsbestimmungsgerät (28).

9. System (10) nach Anspruch 8,
- wobei die Ausgabeeinrichtung (40) eine Anzeige (41) und/oder einen Schallerzeuger (42) und/oder eine Vibrationseinrichtung (43) aufweist.

10. System (10) nach Anspruch 8 oder 9, aufweisend:
- einen Schutzhelm (61), einen Gesichts- und/oder Gehörschutz (62), eine Schutzbrille, einen Schutzhandschuh (64), eine Smartwatch (65), ein Armband oder einen Armreif, an welchem/welcher die Bereitstellungseinrichtung (20) und/oder die Ausgabeeinrichtung (40) angeordnet sind/ist.

11. System (10) nach einem der Ansprüche 8 bis 10, aufweisend:
- ein Schneidgerät (50), das zum Ausführen mindestens eines Schnitts (AS) in den Baum (100) zum Fällen von dem Baum (100) ausgebildet ist.

## Claims

1. Method for assisting during felling of a tree (100), the method comprising the steps:
a) providing a property (EB) of the tree (100) and/or a property (EU) of an environment (110) of the tree (100),
b) obtaining of felling information (Info) related to an ideal felling direction (FR) of the tree based on the provided property (EB, EU), wherein the ideal felling direction (FR) is obtained, wherein the felling information (Info) is based on the obtained felling direction (FR) or is obtained based on the obtained felling direction (FR), and
c) outputting the obtained felling information (Info),
**characterized in that**
the step a) includes: receiving the property (EB, EU) and/or identifying the property (EB, EU) using optical identification and/or inertial measurement and/or a spirit level (25) and/or a compass (26) and/or local position determination and/or satellite position determination.

2. Method according to claim 1,
- wherein the method comprises the step: obtaining a position (PO) and/or a marking (KN) of the tree (100), and
- wherein the step a) includes: receiving the property (EB, EU) based on the obtained position (PO) and/or the obtained marking (KN).

3. Method according to any of the preceding claims,
- wherein the property (EB) of the tree (100) is a geometry (GE) of the tree (100) and/or a surface characteristic (OE) of the tree (100) and/or a tree species (BE) of the tree (100), and/or
- wherein the property (EU) of the environment (110) of the tree (100) includes at least one position (PON) of at least one adjacent tree (111) and/or at least one position (POG) of at least one hazardous point (112) and/or at least one position (POR) of at least one logging trail (113) and/or a shape and/or a slope of the environment (FNU) and/or a wind direction and/or a wind speed (WRG).

4. Method according to any of the preceding claims,
- wherein the step b) includes: obtaining a free felling area (120) for the tree (100) and/or a logging direction (121) to a logging trail (113) and/or a felling retreat (122) for a forestry worker (90) based on the provided property (EB, EU), and
- wherein the felling information (Info) related to the ideal felling direction (FR) of the tree (100) is obtained based on the obtained free area (120) and/or the obtained logging direction (121) and/or the obtained felling retreat (122).

5. Method according to any of the preceding claims,
wherein the felling information (Info) includes:
- the ideal felling direction (FR) of the tree (100) and/or
- at least a part (IST) of an ideal course (ISV) of at least one cut (AS) to be executed in the tree (100) for felling the tree (100) in the ideal felling direction (FR) and/or
- at least one ideal position (IPOS) and/or at least one ideal orientation (IORS) of a cutting apparatus (50) executing the cut.

6. Method according to any of the preceding claims,
- wherein in step c) the felling information (Info) is outputted using optics and/or acoustics and/or haptics.

7. Method according to any of the preceding claims, the method comprising the steps:
d) identifying at least a part (TST) of a course (TSV) of a cut (TS) in the tree (100) for felling the tree (100) during execution thereof and/or identifying a position (POS) and/or an orientation (ORS) of a cutting apparatus (50) executing the cut during execution thereof,
e) comparing the identified part (TST) to the course (TSV) to an obtained part (IST) of an ideal course (ISV) of a cut (AS) to be executed in the tree (100) for felling the tree (100) in the ideal felling direction (FR) and/or comparing the identified position (POS) and/or the identified orientation (ORS) of the cutting apparatus (50) to an obtained ideal position (IPOS) and/or an obtained ideal orientation (IORS) of the cutting apparatus (50) for executing the cut (AS) to be executed, and
f) obtaining and outputting cutting information (Info') for executing the cut (AS) based on the comparison during step d).

8. System (10) for assisting during felling of a tree (100), comprising:
- a provision device (20) configured to provide a property (EB) of the tree (100) and/or a property (EU) of an environment (110) of the tree (100),
- a determination device (30) configured to obtain felling information (Info) related to an ideal felling direction (FR) of the tree (100) based on the provided property (EB, EU), wherein the ideal felling direction (FR) is obtained, wherein the felling information (Info) is based on the obtained felling direction (FR) or is obtained based on the obtained felling direction (FR), and
- an output device (40) configured to output the obtained felling information (Info),
**characterized in that**
the provision device (20) includes a receiver device (21) configured to receive the property (EB, EU), and/or includes an identification device (22) configured to identify the property (EB, EU), the identification device including a camera (23) and/or an inertial measuring unit (24) and/or a spirit level (25) and/or a compass (26) and/or a local position determination device (27) and/or a satellite position determination device (28).

9. System (10) according to claim 8,
- wherein the output device (40) includes a display (41) and/or a sound generator (42) and/or a vibration device (43).

10. System (10) according to claim 8 or 9, comprising:
- a protective helmet (61), a face shield and/or ear protection (62), safety goggles, a protective glove (64), a smartwatch (65), an armband or a wristband or a bracelet, whereon the provision device (20) and/or the output device (40) are/is disposed.

11. System (10) according to any of claims 8 to 10, comprising:
- a cutting apparatus (50) configured to execute at least one cut (AS) in the tree (100) for felling the tree (100).

## Revendications

1. Procédé d'aide à l'abattage d'un arbre (100), le procédé comprenant les étapes suivantes :
a) fournir une propriété (EB) de l'arbre (100) et/ou une propriété (EU) d'un environnement (110) de l'arbre (100),
b) déterminer une information d'abattage (Info) relative à une direction d'abattage idéale (FR) de l'arbre (100) en fonction de la propriété (EB, EU) fournie, la direction d'abattage idéale (FR) étant déterminée, l'information d'abattage (Info) étant basée sur la direction d'abattage déterminée (FR) ou déterminée sur la base de la direction d'abattage déterminée (FR), et
c) délivrer en sortie l'information d'abattage déterminée (Info), **caractérisé en ce que** l'étape a) comprend : la réception de la propriété (EB, EU) et/ou la détection de la propriété (EB, EU) au moyen d'une détection optique et/ou d'une mesure inertielle et/ou d'une nivelle (25) et/ou d'une boussole (26) et/ou d'une détermination de position locale et/ou d'une détermination de position par satellite.

2. Procédé selon la revendication 1,
- le procédé comprenant l'étape suivante : déterminer une position (PO) et/ou un identifiant (KN) de l'arbre (100) et
- l'étape a) comprenant : la réception de la propriété (EB, EU) sur la base de la position déterminée (PO) et/ou de l'identifiant déterminé (KN).

3. Procédé selon l'une des revendications précédentes,
- la propriété (EB) de l'arbre (100) étant une géométrie (GE) de l'arbre (100) et/ou une qualité de surface (OE) de l'arbre (100) et/ou une essence (BE) de l'arbre (100) et/ou
- la propriété (EU) de l'environnement (110) de l'arbre (100) étant au moins une position (PON) d'au moins un arbre adjacent (111) et/ou au moins une position (POG) d'au moins un emplacement dangereux (112) et/ou au moins une position (POR) d'au moins un layon de débardage (113) et/ou une forme et/ou une pente de l'environnement (FNU) et/ou une direction et/ou vitesse de vent (WRG).

4. Procédé selon l'une des revendications précédentes,
- l'étape b) comprenant : la détermination d'une surface de chute libre (120) pour l'arbre (100) et/ou d'une direction de débardage (121) vers un layon de débardage (113) et/ou d'une voie de retraite (122) destinée à un forestier (90) sur la base de la propriété fournie (EB, EU) et
- l'information d'abattage (Info) relative à la direction d'abattage idéale (FR) de l'arbre (100) étant déterminée sur la base de la surface libre déterminée (120) et/ou de la direction de débardage déterminée (121) et/ou de la voie de retraite déterminée (122).

5. Procédé selon l'une des revendications précédentes, l'information d'abattage (Info) comportant :
- la direction d'abattage idéale (FR) de l'arbre (100) et/ou
- au moins une partie (IST) d'un tracé idéal (ISV) d'au moins une coupe (AS) à effectuer dans l'arbre (100) pour abattre l'arbre (100) dans la direction d'abattage idéale (FR) et/ou
- au moins une position idéale (IPOS) et/ou au moins une orientation idéale (IORS) d'un dispositif de coupe (50) réalisant la coupe.

6. Procédé selon l'une des revendications précédentes,
- à l'étape c), l'information d'abattage (Info) étant fournie sous forme optique et/ou acoustique et/ou haptique.

7. Procédé selon l'une des revendications précédentes, le procédé comprenant les étapes suivantes :
d) détecter au moins une partie (TST) d'un tracé (TSV) d'une coupe (TS) dans l'arbre (100) pour abattre l'arbre (100) lors de son exécution et/ou détecter une position (POS) et/ou une orientation (ORS) d'un dispositif de coupe (50), exécutant la coupe, pendant l'exécution,
e) comparer la partie détectée (TST) du tracé (TSV) à une partie déterminée (IST) d'un tracé idéal (ISV) d'une coupe (AS) à effectuer dans l'arbre (100) pour l'abattage de l'arbre (100) dans la direction d'abattage idéale (FR) et/ou comparer la position détectée (POS) et/ou l'orientation détectée (ORS) du dispositif de coupe (50) à une position idéale déterminée (IPOS) et/ou une orientation idéale déterminée (IORS) du dispositif de coupe (50) pour exécuter la coupe (AS) et
f) déterminer et délivrer en sortie une information de coupe (Info') pour exécuter la coupe (AS) sur la base de la comparaison à l'étape d).

8. Système (10) d'aide à l'abattage d'un arbre (100), le système comprenant :
- un moyen de fourniture (20) qui est conçu pour fournir une propriété (EB) de l'arbre (100) et/ou une propriété (EU) d'un environnement (110) de l'arbre (100),
- un moyen de détermination (30) qui est conçu pour déterminer une information d'abattage (Info) relative à une direction d'abattage idéale (FR) de l'arbre (100) sur la base de la propriété (EB, EU) fournie, la direction d'abattage idéale (FR) étant déterminée, l'information d'abattage (Info) étant basée sur la direction d'abattage déterminée (FR) ou déterminée sur la base de la direction d'abattage déterminée (FR), et
- un dispositif de délivrance en sortie (40) qui est conçu pour délivrer en sortie l'information d'abattage déterminée (Info), **caractérisé en ce que** le moyen de fourniture (20) comporte un moyen de réception (21) qui est conçu pour recevoir la propriété (EB, EU), et/ou un moyen de détection (22) qui est conçu pour détecter la propriété (EB, EU), le moyen de détection comportant une caméra (23) et/ou une unité de mesure inertielle (24) et/ou une nivelle (25) et/ou une boussole (26) et/ou un dispositif de détermination de position locale (27) et/ou un dispositif de détermination de position par satellite (28) .

9. Système (10) selon la revendication 8,
- le moyen de délivrance en sortie (40) comportant un affichage (41) et/ou un générateur de son (42) et/ou un moyen de vibration (43).

10. Système (10) selon la revendication 8 ou 9, comprenant :
- un casque de protection (61), une protection faciale et/ou auditive (62), des lunettes de protection, des gants de protection (64), une montre intelligente (65), un brassard ou un bracelet sur lequel le moyen de fourniture (20) et/ou le moyen de délivrance en sortie (40) est/sont disposé(s).

11. Système (10) selon l'une des revendications 8 à 10, comprenant :
- un dispositif de coupe (50) qui est conçu pour effectuer au moins une coupe (AS) dans l'arbre (100) pour abattre l'arbre (100).
